# EUROPÄISCHE PATENTSCHRIFT

(11) **EP 4 063 302 B1**
(45) Veröffentlichungstag und Bekanntmachung des Hinweises auf die Patenterteilung: **02.07.2025**
(21) Anmeldenummer: 22162805.0
(22) Anmeldetag: 17.03.2022
(51) Int. Cl.: B65G 19/02, B65B 35/10, B65B 43/00, B65B 67/02

(54) **VERPACKUNGSTRANSPORTVORRICHTUNG**
PACKAGING TRANSPORT DEVICE
DISPOSITIF DE TRANSPORT D'EMBALLAGES

(30) Priorität: 17.03.2021 DE 102021106511
(43) Veröffentlichungstag der Anmeldung: 28.09.2022
(73) Patentinhaber: Syntegon Packaging Systems AG, 8222 Beringen (CH)
(72) Erfinder: Frank, Alexander, 8207 Schaffhausen (CH)
(74) Vertreter: Novagraaf Group

(56) Entgegenhaltungen:
- DE-A1- 102005 017 159
- DE-B- 1 120 360
- US-A- 5 791 451

## Beschreibung

### Stand der Technik

Aus DE 10 2005 017 159 A1 ist bereits eine Verpackungstransportvorrichtung mit einer Auflageeinheit, die eine einen ersten Streckenabschnitt definierende erste Auflagefläche und zumindest eine einen zweiten Streckenabschnitt definierende zweite Auflagefläche aufweist, die um eine, in eine Transportrichtung verlaufende Kippachse verkippt zur ersten Auflagefläche ist, bekannt, wobei die Verpackungstransportvorrichtung ein Treibmittel und mit dem Treibmittel verbundene Mitnehmer aufweist, die um die Kippachse beweglich gelagert sind.

Des Weiteren sind aus US 5 791 451 A und DE 11 20 360 B, welche die Merkmale des Oberbegriffs des Anspruchs 1 offenbart, bereits Verpackungstransportvorrichtungen mit einer Auflageeinheit, die eine einen ersten Streckenabschnitt definierende erste Auflagefläche und zumindest eine einen zweiten Streckenabschnitt definierende zweite Auflagefläche aufweist, die um eine, in eine Transportrichtung verlaufende Kippachse verkippt zur ersten Auflagefläche ist, bekannt, wobei die Verpackungstransportvorrichtungen ein Treibmittel und mit dem Treibmittel verbundene Mitnehmer aufweisen, die um die Kippachse beweglich gelagert sind.

### Offenbarung der Erfindung

Die Erfindung geht aus von einer Verpackungstransportvorrichtung nach Anspruch 1 mit einer Auflageeinheit, die eine einen ersten Streckenabschnitt definierende erste Auflagefläche und zumindest eine einen zweiten Streckenabschnitt definierende zweite Auflagefläche aufweist, die um eine, in eine Transportrichtung verlaufende Kippachse verkippt zur ersten Auflagefläche ist, wobei die Verpackungstransportvorrichtung ein Treibmittel und mit dem Treibmittel verbundene Mitnehmer aufweist, die um die Kippachse beweglich gelagert sind, wobei das Treibmittel von einem Riemen, insbesondere einem Zahnriemen gebildet ist, wobei die Auflageeinheit eine Lagereinheit aufweist, die dazu vorgesehen ist, zumindest eine der Auflageflächen in ihrem Kippwinkel einstellbar zu lagern.

Es wird vorgeschlagen, dass die Auflageflächen bildenden Teile der Auflageeinheit über relativ zueinander beweglich gelagerte Längselemente verbunden sind, wobei die Längselemente in ihre Längsrichtung eine wesentlich größere Erstreckung aufweisen als in ihre Quererstreckung, wobei die Längsrichtung der Längselemente im Wesentlichen parallel zur Transportrichtung verläuft, wobei die Längselemente quer zur Transportrichtung betrachtet neben dem Treibmittel angeordnet sind und Auflageflächen für die Produktbehälter und die Mitnehmer bilden. Es sollen unter Mitnehmer vorzugsweise Elemente verstanden werden, die zu einer Positionssicherung eines zu fördernden Produkts und/oder insbesondere Produktbehälters, insbesondere auf dem Treibmittel vorgesehen sind. Durch die erfindungsgemäße Ausgestaltung der Verpackungstransportvorrichtung kann eine besonders einfache Schrägstellung von Produkten und/oder Produktbehältern und es kann ein positionsgenauer und reproduzierbarer Transport erreicht werden. Ein Übergang zwischen den Auflageflächen kann einfach realisiert werden.

Dabei können die Mitnehmer relativ zum Treibmittel um die Kippachse verkippbar gelagert sein, beispielsweise über spezielle Lagerstellen auf dem Treibmittel, und/oder besonders vorteilhaft ist das Treibmittel selbst, vorzugsweise um die Kippachse, verdrehbar ausgebildet und ist zwischen den Streckenabschnitten verdreht. Dadurch kann eine einfache Lagerung der Mitnehmer am Treibmittel erreicht werden. Besonders vorteilhaft können die Mitnehmer von einzelnen Stäben gebildet sein. Die Stäbe können dabei mittels verschiedenen, dem Fachmann als sinnvoll erscheinenden Verbindungen mit dem Treibmittel verbunden sein, jedoch besonders vorteilhaft über Steckverbindungen.

Bevorzugt ist das Treibmittel zwischen den Streckenabschnitten um eine im Treibmittel verlaufende Achse verdreht, die einen nicht unwesentlichen Abstand zu beiden Rändern des Treibmittels aufweist. Dabei soll unter "nicht unwesentlich" größer als 10% und vorzugsweise größer als 20% einer maximalen Gesamtbreite des Treibmittels verstanden werden. Ganz besonders bevorzugt verläuft die Achse zumindest im Wesentlichen koaxial zu einer Seele des Treibmittels, wobei in diesem Zusammenhang unter "zumindest im Wesentlichen koaxial" mit einer Abweichung kleiner als 20% und besonders bevorzugt kleiner als 10% bezogen auf eine maximale Gesamtbreite des Treibmittels verstanden werden soll. Durch eine entsprechende Ausgestaltung kann ein durch die Verdrehung des Treibmittels bedingter Positionsverlust zumindest weitgehend reduziert und besonders vorteilhaft vollständig vermieden werden.

Das Treibmittel kann von verschiedenen, dem Fachmann als sinnvoll erscheinenden Mitteln gebildet sein, wie beispielsweise von Ketten. Erfindungsgemäß ist das Treibmittel jedoch von einem Riemen, insbesondere einem Zahnriemen gebildet, wodurch eine vorteilhafte Lagerung der Mitnehmer und auch vorteilhafte Abstützflächen für Produkte durch das Treibmittel selbst realisiert werden können.

In einer weiteren Ausgestaltung der Erfindung wird vorgeschlagen, dass das Treibmittel zumindest teilweise getrennt von der Auflageeinheit ausgebildet ist, sich in Transportrichtung über die Streckenabschnitte erstreckt und in einem Betrieb diese durchläuft. Hierdurch können vorteilhafte, insbesondere von dem Treibmittel unabhängig breite Auflageflächen einfach erreicht und das Treibmittel kann kostengünstig ausgestaltet werden, und zwar insbesondere, indem dieses schmaler als zumindest eine der Auflageflächen ausgebildet ist, wodurch zudem eine einfache Verdrehbarkeit erreicht werden kann. Die Auflageflächen können zumindest teilweise zusammenhängend ausgebildet und/oder können von zumindest teilweise unterbrochenen Auflageabschnitten gebildet sein.

Das Treibmittel kann quer zur Transportrichtung betrachtet an verschiedenen Positionen zu den Auflageflächen angeordnet sein, besonders vorteilhaft ist das Treibmittel jedoch quer zur Transportrichtung betrachtet zumindest im Wesentlichen mittig zu zumindest einer der Auflageflächen, vorzugsweise mittig zu beiden Auflageflächen angeordnet. Dabei soll unter "zumindest im Wesentlichen mittig", verstanden werden, dass eine Mittelachse des Treibmittels von einer in Transportrichtung verlaufenden Mittelachse der Auflagefläche einen Abstand aufweist, der kleiner ist als 3-mal, vorzugsweise kleiner als 2-mal einer maximalen Gesamtbreite des Treibmittels. Durch eine entsprechende Ausgestaltung kann ein einfaches Verkippen des Treibmittels, insbesondere vorteilhaft um seine Seele, erreicht und es können einfache Mitnehmer, vorteilhaft zu einer Mittelachse des Treibmittels spiegelsymmetrisch ausgebildete Mitnehmer, erreicht werden. Grundsätzlich ist jedoch auch denkbar, dass die Mitnehmer quer zur Transportrichtung betrachtet über eine Seite des Treibmittels weiter hinausragen als über eine gegenüberliegende Seite.

In einer weiteren Ausgestaltung der Erfindung wird vorgeschlagen, dass eine durch die Mitnehmer definierte Teilung einstellbar ist, wodurch eine hohe Flexibilität erreicht werden kann. Hierfür können verschiedene, vordefinierte Positionen am Treibmittel vorgegeben sein, in die die Mitnehmer zur Erzielung unterschiedlicher Teilungen positioniert werden können, denkbar könnte jedoch auch sein, dass eine stufenlose Einstellung möglich ist, beispielsweise indem die Mitnehmer über eine Kraftschlussverbindung an beliebigen Stellen am Treibmittel fixierbar sind.

Ferner kann die Flexibilität der Vorrichtung dadurch erhöht werden, dass die Auflageeinheit erfindungsgemäß eine Lagereinheit aufweist, die dazu vorgesehen ist, zumindest eine der Auflageflächen in ihrem Kippwinkel einstellbar zu lagern. Dabei kann die Auflagefläche manuell einstellbar ausgebildet oder vorzugsweise mittels eines Aktors einstellbar ausgebildet sein, der zur Verstellung des Kippwinkels der Auflagefläche vorgesehen ist.

Die erfindungsgemäße Verpackungstransportvorrichtung soll hierbei nicht auf die oben beschriebene Anwendung und Ausführungsform beschränkt sein. Insbesondere bezieht sich die Erfindung auch auf eine Produktionsmaschine, insbesondere eine Lebensmittelabfüll- und/oder Lebensmittelverpackungsmaschine, mit einer entsprechenden Verpackungstransportvorrichtung sowie auf ein Verfahren zum Betrieb einer entsprechenden Verpackungstransportvorrichtung. Zudem kann die erfindungsgemäße Verpackungstransportvorrichtung zu einer Erfüllung einer hierin beschriebenen Funktionsweise eine von einer hierin genannten Anzahl von einzelnen Elementen, Bauteilen und Einheiten sowie Verfahrensschritten abweichende Anzahl aufweisen. Ferner sollen bei den in dieser Offenbarung angegebenen Wertebereichen auch innerhalb der genannten Grenzen liegende Werte als offenbart und als beliebig einsetzbar gelten.

### Zeichnung

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination.

Es zeigen:
- Fig. 1: eine schematische Darstellung eines Ausschnitts einer Produktionsmaschine mit einer erfindungsgemäßen Verpackungstransportvorrichtung und
- Fig. 2: eine schematische Schnittdarstellung entlang einer Linie II-II in Figur 1.

### Beschreibung des Ausführungsbeispiels

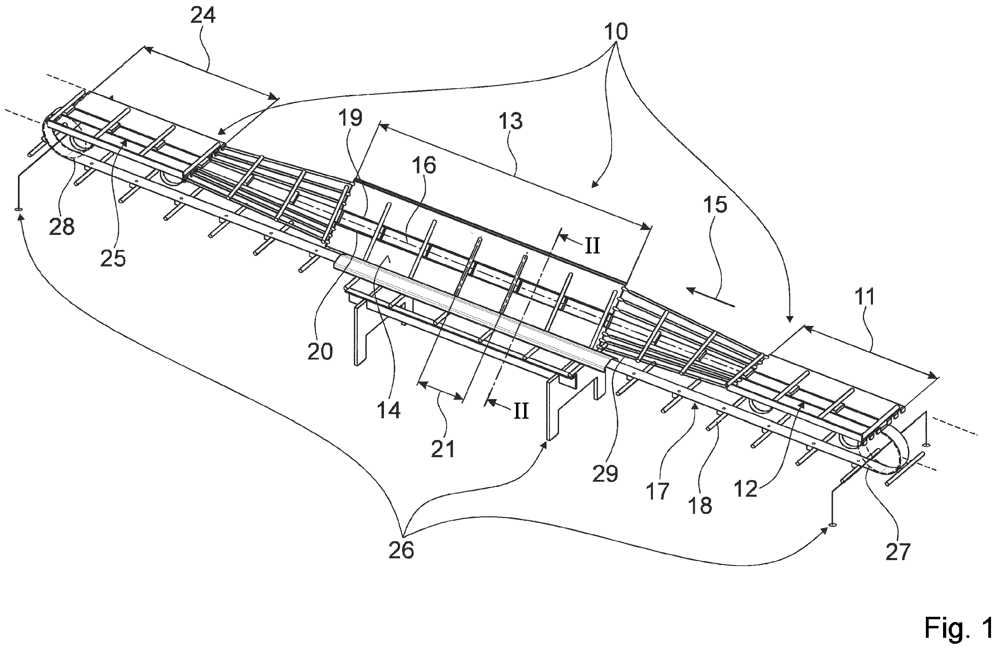

Figur 1 zeigt eine schematische Darstellung eines Ausschnitts einer Produktionsmaschine, und zwar einer Lebensmittelverpackungsmaschine, mit einer Verpackungstransportvorrichtung.

Die Verpackungstransportvorrichtung weist eine Auflageeinheit 10 auf, die eine einen ersten Streckenabschnitt 11 definierende erste Auflagefläche 12, eine einen zweiten Streckenabschnitt 13 definierende zweite Auflagefläche 14 sowie eine einen dritten Streckenabschnitt 24 definierende dritte Auflagefläche 25 aufweist. Die zweite Auflagefläche 14 ist um eine in Transportrichtung 15 verlaufende Kippachse 16 relativ zur ersten Auflagefläche 12 und relativ zur dritten Auflagefläche 25 verkippt.

Die Verpackungstransportvorrichtung weist ein von einem Zahnriemen ausgebildetes Treibmittel 17 und mit dem Treibmittel 17 über Steckverbindungen verbundene, von Einzelstäben gebildete Mitnehmer 18 auf, die um die Kippachse 16 beweglich gelagert sind, und zwar indem das Treibmittel 17 selbst um die Kippachse 16 verdrehbar ausgebildet und insbesondere zwischen den Streckenabschnitten 11, 13 um die Kippachse 16 verdreht ist.

Das Treibmittel 17 ist zwischen den Streckenabschnitten 11, 13 um eine im Treibmittel 17 verlaufende Achse, und zwar um die Kippachse 16 verdreht, die einen Abstand zu zwei Rändern 19, 20 des Treibmittels 17 aufweist, und zwar koaxial zu einer Seele des Treibmittels 17 verläuft.

Das Treibmittel 17 ist getrennt von der Auflageeinheit 10 ausgebildet, erstreckt sich in Transportrichtung 15 über die Streckenabschnitte 11, 13, 24 und durchläuft diese in einem Betrieb. Dabei läuft das Treibmittel 17 mit den Mitnehmern 18 auf den Auflageflächen 12, 14, 25.

Im Betrieb werden in dem Streckenabschnitt 11, in dem die erste Auflagefläche 12 horizontal verlaufend ausgebildet ist, nicht näher dargestellte Produktbehälter aufgelegt. Betrachtet man ein bestimmtes Teilstück des Treibmittels 17, das beim Betrieb den Streckenabschnitt 11 durchlaufen hat, wird dieses bestimmte Teilstück zuerst in eine erste Richtung um die Kippachse 16 verdreht, wodurch die darauf aufgelegten Produktbehälter verkippt werden. Im zweiten Streckenabschnitt 13, in dem die zweite Auflagefläche 14 verkippt zur ersten Auflagefläche 12 ausgebildet ist, werden die Produktbehälter beladen. Hat das bestimmte Teilstück des Treibmittels 17 den zweiten Streckenabschnitt 13 durchlaufen, wird dieses Teilstück in eine zweite Richtung zurück in seine Ausgangsstellung um die Kippachse 16 verdreht, wodurch die darauf aufgelegten Produktbehälter wieder zurück in eine horizontale Ausrichtung gekippt werden. Im dritten Streckenabschnitt 24, in dem die dritte Auflagefläche 25 horizontal ausgerichtet ist, sind die Produktbehälter wieder horizontal ausgerichtet und können vorteilhaft entnommen werden. Somit lässt sich ein Übergang vom ersten Streckenabschnitt 11 mit der horizontalen ersten Auflagefläche 12 einfach zum zweiten Streckenabschnitt 13 mit der verkippten zweiten Auflagefläche 14 realisieren. Die Produktbehälter bleiben vorteilhaft gemäß einer durch die Mitnehmer 18 vorgegebenen Teilung 21 zwischen den Mitnehmern 18 positioniert. Ein fehleranfälliges Eintakten kann vermieden werden.

Ein nicht näher dargestellter Antrieb des Treibmittels 17 und ein den Antrieb aufnehmendes Gehäuse ist zu einer schematisch angedeuteten Aufständereinheit 26 der Verpackungstransportvorrichtung orientierungsfest angeordnet und wird nicht mit dem Treibmittel 17 mit verkippt. Über die Aufständereinheit 26 ist die Auflageeinheit 10 mit ihren Auflageflächen 12, 14, 25 auf einem Boden aufgeständert. Ferner sind schematisch dargestellte Umlenkrollen 27, 28, über die das Treibmittel 17 umgelenkt wird, über die Aufständereinheit 26 am Boden aufgeständert. Ein aufwändig zu synchronisierender Kippmechanismus, wie insbesondere eine Synchronisierung von Spindeln und Servomotoren, kann vermieden werden.

Das Treibmittel 17 ist schmaler als die Auflageflächen 12, 14, 25 ausgebildet und ist quer zur Transportrichtung 15 betrachtet zumindest im Wesentlichen mittig zu den Auflageflächen 12, 14, 25 angeordnet.

Die durch die Mitnehmer 18 definierte Teilung 21 ist einstellbar, und zwar können einzelne Mitnehmer 18 entnommen werden, so dass eine Teilung erreicht werden kann, bei der ein Abstand zwischen zwei Mitnehmern 18 ein Vielfaches beträgt im Vergleich zu der Teilung 21, bei der keine Mitnehmer 18 entnommen sind. Somit kann vorteilhaft eine Anpassung an unterschiedlich große Produktbehälter erreicht werden.

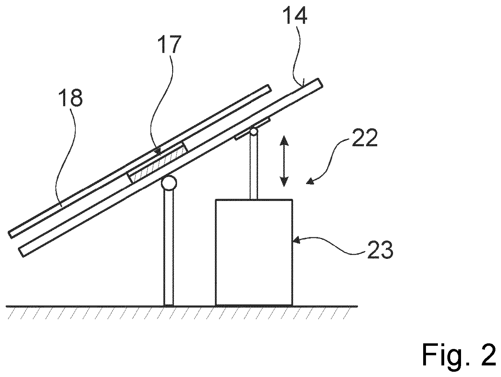

Ferner weist die Auflageeinheit 10 eine Lagereinheit 22 auf (Fig. 2), die dazu vorgesehen ist, die zweite Auflagefläche 14 in ihrem Kippwinkel einstellbar zu lagern. Um eine zumindest teilautomatisierte Einstellung zu ermöglichen, weist die Verpackungstransportvorrichtung einen Aktor 23 auf, der zur Verstellung des Kippwinkels der zweiten Auflagefläche 14 vorgesehen ist. Um eine Einstellbarkeit der zweiten Auflagefläche 12 der Auflageeinheit 10 relativ zu der ersten Auflagefläche 12 der Auflageeinheit 10 sowie zu der dritten Auflagefläche 25 zu ermöglichen, sind die Auflageflächen 12, 14, 25 bildende Teile der Auflageeinheit 10 über relativ zueinander beweglich gelagerte Längselemente 29 verbunden. Die Längselemente 29 zeichnen sich dadurch aus, dass sie in ihre Längsrichtung eine wesentliche, d.h. eine vielfach größere Erstreckung aufweisen als in ihre Quererstreckung. Die Längsrichtung der Längselemente 29 verläuft im Wesentlichen parallel zur Transportrichtung 15. Die Längselemente 29 sind quer zur Transportrichtung 15 betrachtet neben dem Treibmittel 17 angeordnet und bilden ebenfalls Auflageflächen für die Produktbehälter und die Mitnehmer 18. Die Längselemente 29 werden von Stangen gebildet, könnten jedoch auch von anderen, dem Fachmann als sinnvoll erscheinenden Längselementen gebildet sein, wie beispielsweise von gespannten biegeweichen Elementen, wie Seilen.

## Patentansprüche

1. Verpackungstransportvorrichtung mit einer Auflageeinheit (10), die eine einen ersten Streckenabschnitt (11) definierende erste Auflagefläche (12) und zumindest eine einen zweiten Streckenabschnitt (13) definierende zweite Auflagefläche (14) aufweist, die um eine, in eine Transportrichtung (15) verlaufende Kippachse (16) verkippt zur ersten Auflagefläche (12) ist, mit einem Treibmittel (17) und mit dem Treibmittel (17) verbundene Mitnehmer (18), die um die Kippachse (16) beweglich gelagert sind, wobei das Treibmittel (17) von einem Riemen, insbesondere einem Zahnriemen, gebildet ist, wobei die Auflageeinheit (10) eine Lagereinheit (22) aufweist, die dazu vorgesehen ist, zumindest eine der Auflageflächen (14) in ihrem Kippwinkel einstellbar zu lagern, **dadurch gekennzeichnet, dass** die Auflageflächen (12, 14, 25) bildenden Teile der Auflageeinheit (10) über relativ zueinander beweglich gelagerte Längselemente (29) verbunden sind, wobei die Längselemente (29) in ihre Längsrichtung eine wesentlich größere Erstreckung aufweisen als in ihre Quererstreckung, wobei die Längsrichtung der Längselemente (29) im Wesentlichen parallel zur Transportrichtung (15) verläuft, wobei die Längselemente (29) quer zur Transportrichtung (15) betrachtet neben dem Treibmittel (17) angeordnet sind und Auflageflächen für die Produktbehälter und die Mitnehmer (18) bilden.

2. Verpackungstransportvorrichtung nach Anspruch 1,
**dadurch gekennzeichnet, dass** das Treibmittel (17) verdrehbar ausgebildet und zwischen den Streckenabschnitten (11, 13) verdreht ist.

3. Verpackungstransportvorrichtung zumindest nach Anspruch 2,
**dadurch gekennzeichnet, dass** das Treibmittel (17) zwischen den Streckenabschnitten (11, 13) um eine im Treibmittel (17) verlaufende Achse verdreht ist, die einen nicht unwesentlichen Abstand zu beiden Rändern (19, 20) des Treibmittels (17) aufweist, wobei der nicht unwesentliche Abstand größer ist als 10% einer maximalen Gesamtbreite des Treibmittels (17).

4. Verpackungstransportvorrichtung nach einem der vorhergehenden Ansprüche,
**dadurch gekennzeichnet, dass** das Treibmittel (17) zumindest teilweise getrennt von der Auflageeinheit (10) ausgebildet ist, sich in Transportrichtung (15) über die Streckenabschnitte (11, 13) erstreckt und in einem Betrieb diese durchläuft.

5. Verpackungstransportvorrichtung nach Anspruch 4,
**dadurch gekennzeichnet, dass** das Treibmittel (17) schmaler als zumindest eine der Auflageflächen (12, 14) ausgebildet ist.

6. Verpackungstransportvorrichtung nach Anspruch 5,
**dadurch gekennzeichnet, dass** das Treibmittel (17) quer zur Transportrichtung (15) betrachtet zumindest im Wesentlichen mittig zu zumindest einer der Auflageflächen (12, 14) angeordnet ist.

7. Verpackungstransportvorrichtung nach einem der vorhergehenden Ansprüche,
**dadurch gekennzeichnet, dass** eine durch die Mitnehmer (18) definierte Teilung (21) einstellbar ist.

8. Verpackungstransportvorrichtung nach einem der vorhergehenden Ansprüche,
**gekennzeichnet durch** einen Aktor (23), der zur Verstellung des Kippwinkels der Auflagefläche (14) vorgesehen ist.

9. Verpackungstransportvorrichtung nach einem der vorhergehenden Ansprüche,
**dadurch gekennzeichnet, dass** die Längselemente (29) als Stangen oder als gespannte biegeweiche Elemente, wie Seile, ausgebildet sind.

10. Produktionsmaschine, insbesondere Lebensmittelabfüll- und/oder Lebensmittelverpackungsmaschine, mit einer Verpackungstransportvorrichtung nach einem der Ansprüche 1 bis 9.

11. Verfahren zum Betrieb einer Verpackungstransportvorrichtung nach einem der Ansprüche 1 bis 9.

## Claims

1. Packaging transport device comprising a support unit (10) which has a first support surface (12) defining a first track portion (11) and at least one second support surface (14) defining a second track portion (13), which second support surface is tilted relative to the first support surface (12) about a tilt axis (16) extending in a transport direction (15), and comprising a drive means (17) and carrier elements (18) which are connected to the drive means (17) and mounted so as to be movable about the tilt axis (16), the drive means (17) being formed by a belt, in particular a toothed belt, the support unit (10) having a bearing unit (22) provided for mounting at least one of the support surfaces (14) in an adjustable manner with respect to its tilt angle, **characterized in that** the parts of the support unit (10) that form the support surfaces (12, 14, 25) are connected via longitudinal elements (29) which are mounted so as to be movable relative to one another, the longitudinal elements (29) having a substantially greater extension in their longitudinal direction than in their transverse extension, the longitudinal direction of the longitudinal elements (29) extending substantially in parallel with the transport direction (15), the longitudinal elements (29) being arranged next to the drive means (17), when viewed transversely to the transport direction (15), and forming support surfaces for the product containers and the carrier elements (18).

2. Packaging transport device according to claim 1,
**characterized in that** the drive means (17) is designed to be rotatable, and is rotated between the track portions (11, 13).

3. Packaging transport device at least according to claim 2,
**characterized in that** the drive means (17) is rotated between the track portions (11, 13) about an axis extending in the drive means (17), which axis is at a not-insignificant distance from the two edges (19, 20) of the drive means (17), the not-insignificant distance being greater than 10% of a maximum total width of the drive means (17).

4. Packaging transport device according to any of the preceding claims,
**characterized in that** the drive means (17) is designed to be at least partially separated from the support unit (10), extends in the transport direction (15) over the track portions (11, 13) and passes through them during operation.

5. Packaging transport device according to claim 4,
**characterized in that** the drive means (17) is narrower than at least one of the support surfaces (12, 14).

6. Packaging transport device according to claim 5,
**characterized in that** the drive means (17) is arranged at least substantially centrally with respect to at least one of the support surfaces (12, 14), when viewed transversely to the transport direction (15).

7. Packaging transport device according to any of the preceding claims,
**characterized in that** a spacing (21) defined by the carrier elements (18) is adjustable.

8. Packaging transport device according to any of the preceding claims,
**characterized by** an actuator (23) which is provided for adjusting the tilt angle of the support surface (14).

9. Packaging transport device according to any of the preceding claims,
**characterized in that** the longitudinal elements (29) are designed as rods or as tensioned, flexible elements, such as ropes.

10. Production machine, in particular a food filling and/or food packaging machine, comprising a packaging transport device according to any of claims 1 to 9.

11. Method for operating a packaging transport device according to any of claims 1 to 9.

## Revendications

1. Dispositif de transport d'emballages comportant une unité d'appui (10) qui présente une première surface d'appui (12) définissant une première section de voie (11) et au moins une seconde surface d'appui (14) définissant une seconde section de voie (13) et basculée par rapport à la première surface d'appui (12) autour d'un axe de basculement (16) s'étendant dans un sens de transport (15), comportant un moyen de propulsion (17) et des entraîneurs (18) reliés au moyen de propulsion (17) et montés de manière à être mobiles autour de l'axe de basculement (16), dans lequel le moyen de propulsion (17) est formé par une courroie, en particulier une courroie dentée, dans lequel l'unité d'appui (10) présente une unité de support (22) qui est prévue pour supporter au moins l'une des surfaces d'appui (14) de manière à être réglable en termes d'angle de basculement, **caractérisé en ce que** les parties de l'unité d'appui (10) formant les surfaces d'appui (12, 14, 25) sont reliées par l'intermédiaire d'éléments longitudinaux (29) montés de manière à être mobiles les uns par rapport aux autres, dans lequel les éléments longitudinaux (29) présentent dans leur direction longitudinale une extension sensiblement plus grande que dans leur extension transversale, dans lequel la direction longitudinale des éléments longitudinaux (29) s'étend sensiblement parallèlement au sens de transport (15), dans lequel les éléments longitudinaux (29) sont disposés à côté du moyen de propulsion (17), vus transversalement au sens de transport (15), et forment des surfaces d'appui pour les récipients pour produit et les entraîneurs (18).

2. Dispositif de transport d'emballages selon la revendication 1,
**caractérisé en ce que** le moyen de propulsion (17) est conçu de manière à pouvoir tourner et tourne entre les sections de voie (11, 13).

3. Dispositif de transport d'emballages au moins selon la revendication 2,
**caractérisé en ce que** le moyen de propulsion (17) tourne entre les sections de voie (11, 13) autour d'un axe s'étendant dans le moyen de propulsion (17) et présentant une distance non négligeable par rapport aux deux bords (19, 20) du moyen de propulsion (17), dans lequel la distance non négligeable est supérieure à 10 % d'une largeur totale maximale du moyen de propulsion (17).

4. Dispositif de transport d'emballages selon l'une des revendications précédentes,
**caractérisé en ce que** le moyen de propulsion (17) est réalisé au moins partiellement séparément de l'unité d'appui (10), s'étend dans le sens de transport (15) au-delà des sections de voie (11, 13) et traverse celles-ci lors d'un fonctionnement.

5. Dispositif de transport d'emballages selon la revendication 4,
**caractérisé en ce que** le moyen de propulsion (17) est plus étroit qu'au moins l'une des surfaces d'appui (12, 14).

6. Dispositif de transport d'emballages selon la revendication 5,
**caractérisé en ce que** le moyen de propulsion (17), vu transversalement au sens de transport (15), est disposé au moins sensiblement au milieu par rapport à au moins l'une des surfaces d'appui (12, 14).

7. Dispositif de transport d'emballages selon l'une des revendications précédentes,
**caractérisé en ce qu'**un pas (21) défini par les entraîneurs (18) est réglable.

8. Dispositif de transport d'emballages selon l'une des revendications précédentes, **caractérisé par** un actionneur (23) qui est prévu pour le réglage de l'angle de basculement de la surface d'appui (14).

9. Dispositif de transport d'emballages selon l'une des revendications précédentes,
**caractérisé en ce que** les éléments longitudinaux (29) sont réalisés sous forme de barres ou d'éléments tendus souples en flexion, tels que des câbles.

10. Machine de production, en particulier machine de remplissage de produits alimentaires et/ou d'emballage de produits alimentaires, comportant un dispositif de transport d'emballages selon l'une des revendications 1 à 9.

11. Procédé permettant de faire fonctionner un dispositif de transport d'emballages selon l'une des revendications 1 à 9.
